# EUROPÄISCHE PATENTANMELDUNG

(11) **EP 1 354 783 A1**
(43) Veröffentlichungstag der Anmeldung: **22.10.2003**
(21) Anmeldenummer: 03006405.9
(22) Anmeldetag: 21.03.2003
(51) Int. Cl.: B62D 3/02

(54) **Mechanisches Lenkgetriebe eines Kraftfahrzeugs**

(30) Priorität: 12.04.2002 DE 10216130
(71) Anmelder: Bayerische Motoren Werke Aktiengesellschaft, 80809 München (DE)
(72) Erfinder: Graf, Thomas, 86633 Neuburg (DE)

(57) **Zusammenfassung**

Die Erfindung betrifft ein mechanisches Lenkgetriebe eines Kraftfahrzeugs, wobei bevorzugt eine Zahnstange (5) unter Einfluss einer Lenkspindel längs verschoben und diese Verschiebebewegung auf eine Spurstange (2) übertragen wird. Erfindungsgemäß ist zwischen der Zahnstange und der Spurstange ein als Kurvenbahngetriebe ausgebildetes Zwischengetriebe (1) vorgesehen, durch welches in Abhängigkeit von der Verschiebebewegung der Zahnstange der Verschiebeweg der Spurstange vergrößert oder verringert oder im wesentlichen unverändert übertragen werden kann. Bevorzugt ist das Zwischengetriebe als Kurvenbahngetriebe ausgebildet und die Zahnstange mit einem Bewegungsgewinde (5a) versehen, das eine an der Spurstange angelenkte Steuerhülse (4) trägt, die mit einem Führungselement (9) in einer Kurvenbahn (8) des Zwischengetriebes geführt ist, so dass die Steuerhülse aufgrund einer von der Zahnstange hervorgerufenen Längsverschiebung gegenüber der Zahnstange verdreht wird und als Folge hiervon über das Bewegungsgewinde die Steuerhülse gegenüber der Zahnstange längsverschoben wird. Zusätzlich kann mittels eines geeignet in das Zwischengetriebe eingreifenden Aktuators (15) die zugeordnete Spurstange auch unabhängig von einer Verstellbewegung der Zahnstange verschoben werden.

## Beschreibung

Die Erfindung betrifft ein mechanisches Lenkgetriebe eines Kraftfahrzeugs, wobei ein Getriebe-Abtriebselement unter Einfluss eines insbesondere als Lenkspindel ausgebildeten Getriebe-Eingangselements längs verschoben und diese Verschiebebewegung auf eine an ein lenkbares Fahrzeug-Rad angelenkte Spurstange oder dgl. übertragen wird. In dieser allgemein beschriebenen Form sind mechanische Lenkgetriebe in verschiedenen Ausführungsformen bekannt; die am weitesten verbreitete Ausführungsform ist dabei die sog. Zahnstangen-Lenkung, wobei das Getriebe-Abtriebselement als Zahnstange ausgebildet ist.

Zahnstangen-Lenkgetriebe in bzw. für zweispurige Kraftfahrzeuge besitzen in heutiger Ausführung aufgrund ihrer starren Zahnstange einen konstanten Abstand zwischen den Axialgelenken der an den beiden freien Enden der Zahnstange angelenkten Spurstangen, die ihrerseits die Verbindung zu den an den lenkbaren Kfz-Rädern vorgesehenen Achsschenkeln herstellen. Da die lenkbaren Räder eines Zweispur-Kraftfahrzeugs beim Einlenken zur Einhaltung der bekannten Ackermann Beziehung gegenüber der Karosserie unterschiedliche Winkel einnehmen sollen, sind die Anlenkpunkte der Spurstangen am jeweiligen Achsschenkel und die Lage des Lenkgetriebes in Fahrzeuglängsrichtung geometrisch hierdurch festgelegt. Diese Zwangsbeziehungen führen insbesondere bei einer Anordnung des Lenkgetriebes in Fahrtrichtung betrachtet vor dem Rad-Mittelpunkt zu Bauraum-Problemen oder zu einer schlechten Erfüllung der Ackermannbeziehung.

Im Hinblick auf eine sinnvolle Bauraum-Nutzung wäre es jedoch meist wünschenswert, die Spurstange oder dgl. weiter innen, d.h. näher am Lenkgetriebe am Fzg.-Rad anlenken zu können, um insbesondere Bremsen-Bauraum zu gewinnen, bzw. das Lenkgetriebe in Fahrzeuglängsrichtung weiter vorn positionieren zu können. Dann wird jedoch bei bisherigen Ausführungen von Zahnstangenlenkungen die Ackermann Beziehung stark verletzt, was zu schlechtem Fahrverhalten bei engen Kurvenradien führt.

Hiermit soll nun ein mechanisches Lenkgetriebe aufgezeigt werden, welches deutlich größere Freiheiten hinsichtlich der erzielbaren Bewegungs-Übersetzung bietet (= Aufgabe der vorliegenden Erfindung).

Die Lösung dieser Aufgabe ist dadurch gekennzeichnet, dass zwischen dem Getriebe-Abtriebselement und der Spurstange ein Zwischengetriebe vorgesehen ist, durch welches in Abhängigkeit von der Verschiebebewegung des Getriebe-Abtriebselements der Verschiebeweg der Spurstange vergrößert oder verringert oder im wesentlichen unverändert übertragen werden kann. In einer bevorzugten Ausführungsform der Erfindung kann diese genannte Änderung des Verschiebeweges an der jeweils kurveninneren Spurstange unterschiedlich zur kurvenäußeren Spurstange sein, so dass in der Summe eine über dem Lenkeinschlag unterschiedliche und in weiten Bereichen beliebig installierbare Abweichung des Einschlags der gelenkten Räder gegenüber einem Paralleleinschlag derselben ermöglicht wird.

Bevorzugt ist das genannte Zwischengetriebe, das die Eingangsgröße des eigentlichen, das genannte Getriebe-Abtriebselement aufweisenden Lenkgetriebes, nämlich den Lenkradwinkel, über dem Verschiebeweg der des Getriebe-Abtriebselements - hierbei handelt es sich bevorzugt um eine Zahnstange - auf die individuellen Lenkwinkel der lenkbaren Fzg.-Räder veränderlich übersetzt, als Kurvenbahngetriebe ausgebildet. Vorteilhafte Aus- und Weiterbildungen sind Inhalt der weiteren Unteransprüche.

Ein erfindungsgemäßes zusätzliches Zwischen-Getriebe (neben dem eigentlichen die Verdrehbewegung einer Lenkspindel oder dgl. übersetzenden mechanischen Lenkgetriebe, bspw. einem Zahnstangen-Lenkgetriebe) bietet enorme Freiheiten hinsichtlich der Erzielbarkeit von gewünschten Getriebe-Summenübersetzungen. Dabei soll in Abhängigkeit vom durch die Lenkspindel bzw. vom Fahrer mit seinem Lenkrad vorgegebenen Lenkwinkel-Wunsch und insbesondere in Abhängigkeit davon, ob es sich um eine zusätzliche Verschiebung am kurvenäußeren oder kurveninneren Fzg.-Rad handelt, der Verschiebeweg der Spurstange oder dgl. entweder vergrößert oder verringert, ggf. auch unverändert übertragen werden. Eine derartige Variabilität bzw. ein derartig variables Übersetzungsverhältnis im Zwischengetriebe lässt sich besonders einfach und effizient mittels eines sog. Kurvenbahngetriebes erreichen, bei welchem bekanntermaßen ein Abtriebselement nicht nur längsverschoben, sondern unter Einfluss dieser Verschiebebewegung auch verdreht wird. Hierfür ist ein sog. Führungselement, das als Mitnahmestift oder dgl. ausgebildet sein kann, in einer Kurvenbahn, die in einem (zunächst) ortsfesten Getriebeteil vorgesehen ist, geführt. Selbstverständlich kann alternativ hierzu die besagte Kurvenbahn auch im Abtriebselement des Kurvenbahngetriebes und das Führungselement im ortsfesten Getriebeteil vorgesehen sein.

Bei einer relativ einfach bauenden konkreten Ausführungsform des erfindungsgemäßen Zwischengetriebes bzw. Kurvenbahngetriebes kann das Getriebe-Abtriebselement des eigentlichen Lenkgetriebes bevorzugt endseitig mit einem sog. Bewegungsgewinde versehen sein oder mit einem solchen zusammenwirken, auf das eine mit einem entsprechenden Innengewinde versehene Steuerhülse aufgeschraubt ist, an der die Spurstange oder dgl. angelenkt ist. Wenn nun ein an der Steuerhülse vorgesehenes Führungselement in einer ortsfesten Kurvenbahn geführt ist, so wird die Steuerhülse, die somit Bestandteil des Kurvenbahngetriebes ist, aufgrund einer vom Getriebe-Abtriebselement hervorgerufenen Längsverschiebung gegenüber dem Getriebe-Abtriebselement verdreht. Als Folge hiervon wird über das sog. Bewegungsgewinde die Steuerhülse und damit die Spurstange gegenüber dem Getriebe-Abtriebselement (bspw. einer Zahnstange) längsverschoben. Sowohl über die Formgebung der Kurvenbahn, als auch über die Steigung des Bewegungsgewindes kann dabei die gewünschte Übersetzung eingestellt werden, wobei mit der Gestaltung der Kurvenbahn im wesentlichen festgelegt wird, ob durch dieses Zwischengetriebe überhaupt eine Veränderung der Spurstangen-Verschiebebewegung gegenüber der Verschiebebewegung des Getriebe-Abtriebselementes erfolgt, und auch ob diese Veränderung zu einer Vergrößerung oder einer Verringerung des Verschiebewegs führt. Wie stark diese Veränderung dann ist, wird zusätzlich durch die Steigung des besagten Bewegungsgewindes bestimmt.

Wie bereits erwähnt wurde, ist die vorliegende Erfindung besonders sinnvoll für ein mehrspuriges, insbesondere ein zweispuriges Kraftfahrzeug anwendbar, d.h. bspw. für einen Personenkraftwagen, da hierbei neben der möglichst genauen Einhaltung der Ackermann-Beziehung die weiteren genannten Randbedingungen eine besonders große Rolle spielen. An einem zweispurigen Kraftfahrzeug sind dann zwischen den beiden freien Enden der Zahnstange bzw. allgemein des Getriebe-Abtriebselementes des eigentlichen Lenkgetriebes und den zugehörigen, dem linken bzw. rechten Fzg.-Rad zugeordneten Spurstangen erfindungsgemäße sog. Zwischengetriebe vorgesehen, d.h. ein erstes Zwischengetriebe für das linke Fahrzeug-Rad und ein zweites Zwischengetriebe für das rechte Fzg.-Rad, die dabei jeweils als Kurvenbahngetriebe ausgebildet sein können.

Durch eine symmetrische Ausprägung der Kurvenbahn des der linken und des der rechten Spurstange zugeordneten Kurvenbahn-Zwischengetriebes kann bei gleichzeitiger geeigneter Gestaltung der einzelnen Kurvenbahnen vorteilhafterweise ein unterschiedlicher Spurdifferenzwinkel über dem Lenkeinschlag erzeugt werden. Dies kann zur Erzeugung einer optimalen Erfüllung der Ackermannbeziehung der beiden lenkbaren Räder über dem Lenkeinschlag auch ohne Erfüllung der sonst notwendigen geometrischen Zwangsbedingungen genutzt werden.

Was das bereits erwähnte Bewegungsgewinde, das ein Bestandteil eines erfindungsgemäßen Zwischengetriebes ist, betrifft, so kann dieses im Sinne einer kinematisch vorteilhaften und kompakten Bauweise direkt auf das freie Ende des genannten Getriebe-Abtriebselements des eigentlichen Lenkgetriebes, nämlich bspw. auf eine Zahnstange, aufgebracht sein. Alternativ kann die Funktion dieses Bewegungsgewindes aber auch von einer eigenständigen und geeignet angekoppelten Gewindespindel übernommen werden. Besonders kompakt baut das vorgeschlagene Zwischengetriebe dabei, wenn die bereits genannte, mit dem sog. Bewegungsgewinde und dem Kurvenbahngetriebe zusammenwirkende Steuerhülse am freien Ende direkt mit der zugeordneten Spurstange konzentrisch verschraubt ist, bspw. über ein Axialgelenk. Ebenfalls in diesem Sinne kann die Steuerhülse im Gehäuse des sog. Zwischengetriebes, in welchem auch die Kurvenbahn eingebracht ist bzw. eingebracht sein kann, geführt sein.

Eine besonders vorteilhafte Weiterbildung der Erfindung schafft zusätzlich zu den bisherigen Erläuterungen einen weiteren Freiheitsgrad dadurch, dass zusätzlich oder alternativ unabhängig von einer Verstell-Bewegung des Getriebe-Abtriebselements eine oder beide Spurstange(n) verschoben werden kann bzw. können. Hierzu kann ein beliebiger, von extern auf ein geeignetes Element des (jeweiligen) Zwischengetriebes zugreifender Aktuator oder dgl. vorgesehen sein. Wenn dieses Zwischengetriebe wie weiter oben beschrieben ein Kurvenbahngetriebe enthält, so kann bspw. dieser Aktuator die Lage der Kurvenbahn verändern, die - wie weiter oben erläutert wurde - in einem Getriebeteil des Kurvenbahngetriebes vorgesehen ist. In der bisherigen Erläuterungen ist dieses die Kurvenbahn "tragende" Getriebeteil als ortsfest beschrieben, wobei dieser Begriff "ortsfest" in Klammern gesetzt wurde bzw. von einem (zunächst) ortsfesten Getriebeteil gesprochen wurde. Wenn nun abweichend hiervon die Position dieses die Kurvenbahn enthaltenden Getriebeteils zusätzlich veränderbar ist, so liegt eine weitere Verstellmöglichkeit zur Veränderung der Position der jeweils zugeordneten Spurstange vor. Insbesondere kann es sich bei diesem Getriebeteil um das Gehäuse des Zwischengetriebes handeln, das gemäß dieser vorteilhaften Weiterbildung der Erfindung gegenüber dem Gehäuse des eigentlichen Lenkgetriebes, dessen Eingang die Lenkspindel und dessen Ausgang das sog. Getriebe-Abtriebselement ist, verdrehbar ist.

Eine solche zusätzliche aktive und für die beiden lenkbaren Räder voneinander unabhängige Verstellung der jeweiligen Spurstange kann also bspw. durch eine aktive Verdrehung des die Kurvenbahn aufweisenden Gehäuses des Zwischengetriebes erzielt werden. Durch eine solche von einem geeigneten Aktuator (bspw. einem externen elektrischen Antriebsmotor) initiierte Verdrehung wird wiederum in Abhängigkeit von der Steigung des bereits erläuterten Bewegungsgewindes die bereits erläuterte Steuerhülse längsverschoben, so dass unabhängig von einer Bewegung des Getriebe-Abtriebselements des eigentlichen Lenkgetriebes oder einer solchen Bewegung überlagert eine gewünschte Verstellung der jeweiligen Spurstange sowie ein daraus resultierender Radeinschlag erzeugt werden kann.

Ein besonderer Vorteil dieser oder einer vergleichbaren soeben beschriebenen Ausgestaltung der vorliegenden Erfindung ist, dass durch die zusätzlich mögliche aktive Verstellung bei einer gegenläufiger Verstellung des linken Rades gegenüber dem rechten Rad des Kraftfahrzeugs die Spurdifferenzwinkel in Abhängigkeit von fahrdynamischen Parametern wie z.B. Radeinschlag und Querbeschleunigung gezielt aktiv eingestellt werden können und so bspw. ein höheres Seitenkraftpotential und ein spontaneres Anlenkverhalten der Achse erzeugt werden kann. Zusätzlich kann bei gleichläufiger Verstellung zwischen dem linken und rechten lenkbaren Fahrzeug-Rad in begrenztem Umfang eine stufenlose Variation der Lenkgesamtübersetzung erfolgen.

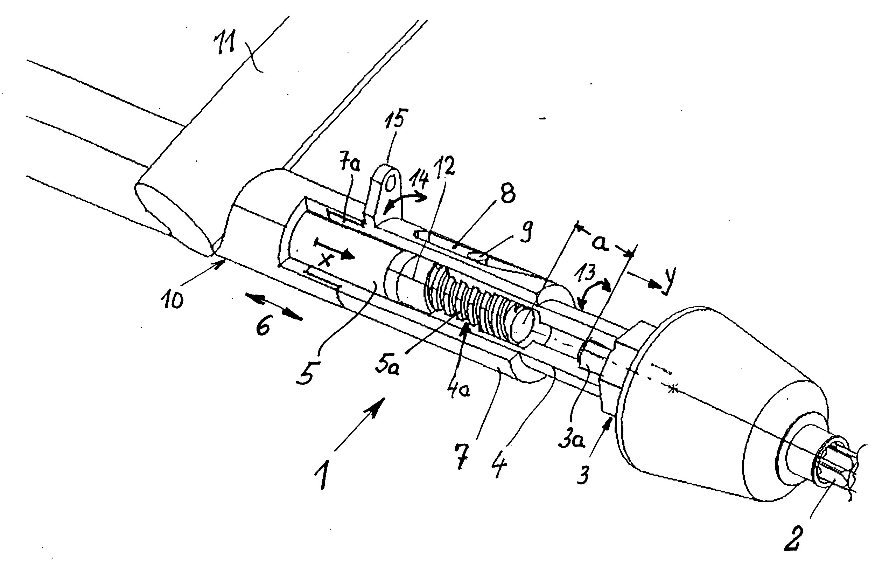

Im weiteren wird die Erfindung anhand eines bevorzugten Ausführungsbeispieles näher beschrieben. Im wesentlichen ein erfindungsgemäßes Zwischengetriebe ist in der beigefügten Figur lediglich prinzipiell für eine Seite eines Zweispur-Fahrzeugs, also bspw. eines Personenkraftwagens, räumlich und dabei teilweise aufgebrochen dargestellt.

Mit der Bezugsziffer 1 ist ein Zwischengetriebe bezeichnet, das zwischen einem herkömmlichen, hier als Zahnstangen-Lenkgetriebe ausgebildetem Lenkgetriebe 10 eines Kraftfahrzeugs und dessen einem lenkbaren (Vorder)-Rad zugeordneter sog. Spurstange 2 vorgesehen ist. Diese Spurstange 2 ist einerseits über ein Axialgelenk 3 an einer sog. Steuerhülse 4 des Zwischengetriebes 1 angelenkt und mit ihrem anderen nicht dargestellten (in der Figur rechtsseitigen) Ende in üblicher Weise mit dem zu lenkenden Fzg.-Rad (bzw. einem Achsschenkel desselben) verbunden.

Das im wesentlichen übliche Lenkgetriebe 10, von welchem lediglich eine Hälfte des Lenkgetriebe-Gehäuses dargestellt ist, und dessen Eingangsgröße der Verdrehwinkel einer ebenfalls nur durch deren Gehäuse dargestellten Lenkspindel 11 ist, die letztlich vom Fahrer des Fahrzeugs betätigt wird, besitzt als sog. Getriebe-Abtriebselement 5 eine Zahnstange, für die im weiteren ebenfalls die Bezugsziffer 5 verwendet wird. Die Zahnstange 5 bzw. das Getriebe-Abtriebselement 5 ist dabei gemäß Pfeilrichtung 6, d.h. in Richtung der Längsachse 12 der Zahnstange 5 längsverschiebbbar. Dabei ist der aus dem Gehäuse des Lenkgetriebes 10 herausragende Abschnitt der Zahnstange 5 nicht mehr mit einer Zahnstangen-Verzahnung versehen, sondern zunächst kreiszylindrisch ausgebildet.

Die Zahnstange 5 bzw. das Abtriebselement 5 des Lenkgetriebes 10 ragt relativ weit aus dem Gehäuse des Lenkgetriebes 10 heraus und ist - anschließend an den soeben genanten kreiszylindrischen Abschnitt - in einem Abschnitt an seinem freien Ende mit einem Bewegungsgewinde 5a versehen, mit dem es in die bereits genannte Steuerhülse 4 des Zwischengetriebes 1 hineinragt, wobei auf den dem Abtriebselement 5 bzw. der Zahnstange 5 zugewandten Innenwand-Abschnitt der Steuerhülse 4 ein mit dem Bewegungsgewinde 5a zusammenwirkendes Innengewinde 4a aufgebracht ist. In anderen Worten ausgedrückt ist die Steuerhülse 4 somit auf den mit dem Bewegungsgewinde 5a versehenen End-Abschnitt der Zahnstange 5 aufgeschraubt.

Die (hier) kreiszylindrische Steuerhülse 4 ist innerhalb eines Gehäuses 7 des Zwischengetriebes 1 angeordnet und dabei gegenüber diesem in Richtung 6 verschiebbar geführt. Im Hinblick auf eine kompakte Bauweise kann sich dieses Gehäuse 7 direkt an das Gehäuse des Lenkgetriebes 10 anschließen, so wie dies hier figürlich dargestellt ist, oder sogar ein Bestandteil des Lenkgetriebe-Gehäuses sein. Auf diese Weise ist u.a. das Getriebe-Abtriebselement 5 des Lenkgetriebes 10, nämlich die Zahnstange 5, optimal gegen Einwirkungen aus der Umgebung geschützt ist.

An dieser Stelle sei darauf hingewiesen, dass das hier erläuterte und figürlich dargestellte Ausführungsbeispiel grundsätzlich zwei verschiedene Ausführungsformen der vorliegenden Erfindung darstellen kann. In einer ersten Ausführungsform ist das Gehäuse 7 des Zwischengetriebes 1 fest mit dem Kraftfahrzeug verbunden, und kann hierfür starr am Gehäuse des Lenkgetriebes 10 befestigt sein bzw. ein Bestandteil des Lenkgetriebe-Gehäuses sein. In einer zweiten Ausführungsform, auf die an späterer Stelle noch näher eingegangen wird, ist das Gehäuse 7 des Zwischengetriebes 1 gegenüber der Zahnstange 5 bzw. dem Lenkgetriebe-Abtriebselement 5 verdrehbar, und zwar um deren bzw. dessen Längsachse 12, die gleich der Zentralachse des auf den freien End-Abschnitt der Zahnstange 5 aufgebrachten Bewegungsgewindes 5a ist.

Für die weitere Erläuterung sei (zunächst) das Gehäuse 7 des Zwischengetriebes 1 starr mit dem Kraftfahrzeug bzw. dem Gehäuse des Lenkgetriebes 10 verbunden.

In der Wand des Gehäuses 7 des Zwischengetriebes 1 ist eine Kurvenbahn 8 vorgesehen, in die ein an der Außenwand der Steuerhülse 4 befestigtes Führungselement 9 in Form eines sog. Mitnahmestiftes oder dgl. eingreift. Wenn somit die Steuerhülse 4 gegenüber dem (diese umgebenden) Gehäuse 7 gemäß Pfeilrichtung 6 längsverschoben wird, so wird diese kreiszylindrische Steuerhülse 4 gleichzeitig unter Einwirkung des in die Kurvenbahn 8 eingreifenden Führungselementes 9 um deren Längsachse 12, die mit der Längsachse des hier ebenfalls im wesentlichen kreiszylindrischen Gehäuses 7 zusammenfällt, gemäß Pfeilrichtung 13 verdreht. Die Steuerhülse 4 mit dem Mitnahmestift bzw. Führungselement 9, der/das sich bezüglich der Längsachse 12 in Radialrichtung erstreckt, bildet somit zusammen mit dem Gehäuse 7 und der darin vorgesehenen Kurvenbahn 8 ein sog. Kurvenbahngetriebe, das ein Bestandteil des hier beschriebenen erfindungsgemäßen Zwischengetriebes 1 ist.

Bereits erwähnt wurde, dass die Zahnstange 5 bzw. das Abtriebselement 5 des Lenkgetriebes in die Steuerhülse 4 hineinragt, wobei die Längsachse 12 dieser Zahnstange 5 mit der Längsachse 12 der Steuerhülse 4 zusammenfällt. Die Zahnstange 5, deren Endabschnitt mit dem bereits genanten Bewegungsgewinde 5a versehen ist, sowie die Steuerhülse 4 und das Gehäuse 7 sind somit in dieser genannten Reihenfolge von innen nach außen betrachtet konzentrisch zueinander angeordnet. Dabei sei das Gehäuse 7 bezüglich des Kraftfahrzeugs nach einer ersten Ausführungsform der Erfindung (wie bereits erwähnt) ortsfest, während die Zahnstange 5 gemäß Pfeilrichtung 6 in Richtung der Längsachse 12 verschiebbar und die Steuerhülse 4 sowohl gemäß Pfeilrichtung 6 in Richtung der Längsachse 12 verschiebbar als auch gemäß Pfeilrichtung 13 um die Längsachse 12 verdrehbar ist.

Ebenfalls bereits erwähnt wurde, dass die bezüglich der Längsachse 12 verdrehfeste Zahnstange 5 und die Steuerhülse 4 über das sog. Bewegungsgewinde 5a bzw. Innengewinde 4a miteinander verschraubt sind. Nachdem das der Zahnstange 5 gegenüberliegende, d.h. das nicht mit dem Innengewinde 4a versehene Ende der Steuerhülse 4 auf einen Verbindungszapfen 3a des Axialgelenks 3 aufgesteckt ist, führt eine RelativVerdrehung zwischen der Steuerhülse 4 und der Zahnstange 5 in Abhängigkeit von der Gewindesteigung des Bewegungsgewindes 5a zwangsweise zu einer Änderung des Abstandes a, der wie figürlich dargestellt zwischen den einander zugewandten Stirnseiten der Zahnstange 5 einerseits und des Axialgelenks 3 bzw. dessen Verbindungszapfens 3a andererseits gemessen wird.

Nachdem die Elemente des Zwischengetriebes 1 (gemäß der genannten ersten Ausführungsform der Erfindung) soweit beschrieben sind, wird nun die Funktionsweise dieses Zwischengetriebes 1 erläutert:
Der Fahrer des Kraftfahrzeuges überträgt wie üblich seinen Lenkwunsch über die Lenkspindel 11 in das übliche Lenkgetriebe 10, wodurch dessen Abtriebselement 5 in Form der Zahnstange 5 gemäß Pfeilrichtung 6 beispielsweise um die Verschiebelänge x in der Figurendarstellung nach rechts verschoben wird. Diese Verschiebebewegung der Zahnstange 5 überträgt sich über dass Bewegungsgewinde 5a zunächst unverändert auf die Steuerhülse 4, die hierdurch in entsprechender Weise ebenfalls nach rechts verschoben wird. Diese Längsverschiebung der Steuerhülse 4 gemäß Pfeilrichtung 6 hat zur Folge, dass diese Steuerhülse 4 unter Zusammenwirken von deren Führungselement 9 mit der Kurvenbahn 8 gemäß Pfeilrichtung 13 um ein gewisses Maß um die Längsachse 12 verdreht wird. Durch diese Verdrehbewegung zwischen Steuerhülse 4 und der Zahnstange 5 wird die Steuerhülse 4 auf die Zahnstange 5 in Abhängigkeit von der Steigung des Bewegungsgewindes 5a bzw. 4a bspw. aufgeschraubt, so dass sich der bereits erläuterte Abstand a zwischen dem freien Ende der Zahnstange 5 und dem Axialgelenk 3 bzw. dem Verbindungszapfen 3a desselben entsprechend verringert. In Summenbetrachtung hat dies zur Folge, dass ausgehend von einer Verschiebestrecke x des Getriebe-Abtriebelementes 5 bzw. der Zahnstange 5 die Steuerhülse 4 mit dem daran befestigten Axialgelenk 3 und somit die Spurstange 2 nur um einen Verschiebeweg y verschoben wird, der gegenüber der ursprünglichen Verschiebestrecke x um die entsprechende Änderung des besagten Abstandes a verringert ist.

Klar ersichtlich wird hieraus, dass mit diesem sich an das übliche Lenkgetriebe 10 anschließendem Zwischengetriebe 1 eine gewünschte weitere und dabei insbesondere von der Verschiebebewegung des Getriebe-Abtriebselements 5 abhängige Übersetzung ermöglicht wird, so dass auf relativ einfache Weise ein jeweils gewünschter Verschiebeweg (y) der Spurstange 2 erreicht werden kann. Insbesondere ist es möglich, für das linke sowie für das rechte lenkbare Rad eines Zweispur-Fahrzeugs, beispielsweise Personenkraftwagens, stark unterschiedliche Lenkeinschläge zu realisieren, wie dies für die Einhaltung der eingangs genannten Ackermann-Beziehung erforderlich sein kann. Jeweils ein derartiges Zwischengetriebe 1 ist nämlich zwischen dem üblichen Lenkgetriebe 10 und der dem linken Fahrzeug-Rad zugeordneten Spurstange 2 als auch zwischen dem üblichen Lenkgetriebe 10 und der dem rechten Fahrzeug-Rad zugeordneten Spurstange vorgesehen. Dabei ist zumindest in begrenztem Umfang auch eine Änderung der Gesamtlenkübersetzung realisierbar.

Im Folgenden wird nun eine Weiterbildung des soweit beschriebenen Zwischengetriebes als weiter oben bereits erwähnte zweite Ausführungsform beschrieben. Zusätzlich zu den bisherigen Erläuterungen besteht ein weiterer Freiheitsgrad, wonach auch das Gehäuse 7 des Zwischengetriebes 1 um die Längsachse 12 gemäß Pfeilrichtung 14 verdrehbar ist, und zwar mittels eines nicht dargestellten Aktuators, der direkt oder indirekt an einem am Gehäuse 7 außenseitig angebrachten Hebel 15 angreift. Entsprechend verdrehbar gelagert ist hierfür das Gehäuse 7 des Zwischengetriebes 1 mit einem geeigneten kreiszylindrischen Absatz 7a in einer entsprechenden Aussparung 10a des Gehäuses des eigentlichen Lenkgetriebes 10. Durch eine Verdrehung des Gehäuses 7 des Zwischengetriebes 1 gegenüber dem Gehäuse des Lenkgetriebes 10 mittels eines diese Verdrehung um die Längsachse 12 gemäß Pfeilrichtung 14 steuernden Aktuators ist somit eine zusätzliche Funktion einer gesteuerten Verstellung realisierbar.

Mit einer derartigen Verdrehung des Gehäuses 7 wird nämlich (wiederum) über die Kurvenbahn 8 und den darin geführten sowie an der Steuerhülse 4 angebrachten Mitnahmestift 9 eine Verdrehung der Steuerhülse 4 relativ zur Zahnstange 5 und damit die bereits mehrfach erläuterte Veränderung des Abstandes a (über das Bewegungsgewinde 5a /4a) induziert. Dabei ist diese Änderung unabhängig von einer Längsverschiebung der Zahnstange 5 gemäß Pfeilrichtung 6, d.h. unabhängig vom sog. Zahnstangen-Hub 6, sondern kann mittels des genannten Aktuators quasi von außen eingesteuert werden, und zwar über die Verdrehung des Gehäuses 7 gemäß Pfeilrichtung 14. Dabei kann diese zweite vom sog. Zahnstangen-Hub gemäß Pfeilrichtung 6 unabhängige (optionale), sog. aktive Steuerung dazu benutzt werden, die beschriebenen Effekte, nämlich eine veränderte Verschiebung der Spurstange(n) 2 einer durch einen Hub der Zahnstange 5 hervorgerufenen Verschiebung der Spurstange 2 zu überlagern. Im übrigen kann hiermit auch eine dem Fahrzustand des Kraftfahrzeugs angepasste Änderung des sog. Spurdifferenzwinkels (zwischen dem linken und dem rechtem lenkbaren Fzg.-Rad) erzeugt werden.

Wenngleich in der obigen Funktionsbeschreibung eine Verringerung des Verschiebewegs y der Spurstange 2 gegenüber der Verschiebestrecke x der Zahnstange 5 beschrieben war, so ist selbstverständlich auch eine Vergrößerung des Verschiebewegs y der Spurstange 2 gegenüber der Verschiebestrecke x der Zahnstange 5 bzw. des Getriebe-Abtriebselements 5 möglich, wozu neben der Gewindesteigung des Bewegungsgewindes 5a bzw. 4a insbesondere die Kurvenbahn 8 im Gehäuse 7 bzw. im genannten Kurvenbahngetriebe entsprechend gestaltet sein kann. Solange diese Kurvenbahn 8 dabei parallel zur Längsachse 12 verläuft, was figürlich für den linken Endabschnitte dieser Kurvenbahn 8 dargestellt ist, erfolgt selbstverständlich keine weitere Übersetzung im Zwischengetriebe 1, d.h. in diesen Fällen wird die Verschiebestrecke x ohne Zwischenübersetzung und somit unverändert in den Verschiebeweg y übertragen. Ferner sei darauf hingewiesen, dass selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

### Bezugszeichenliste:

- 1: Zwischengetriebe
- 2: Spurstange
- 3: Axialgelenk
- 3a: Verbindungszapfen von 3
- 4: Steuerhülse
- 4a: Innengewinde in 4
- 5: Getriebe-Abtriebselement / Zahnstange (des Lenkgetriebes)
- 5a: Bewegungsgewinde auf freiem End-Abschnitt von 5
- 6: Pfeilrichtung: Verschiebebewegung von 5
- 7: Gehäuse des Zwischengetriebes 1
- 7a: Absatz (an 7)
- 8: Kurvenbahn
- 9: Führungselement (Mitnahmestift)
- 10: (Zahnstangen)-Lenkgetriebe
- 10a: Aussparung (im Gehäuse von 10 zur Aufnahme von 7a)
- 11: Lenkspindel
- 12: Längsachse (von 4, 5, 7)
- 13: Pfeilrichtung: Verdrehbewegung von 4
- 14: Pfeilrichtung: Verdrehbewegung von 7
- 15: Hebel

- a: Abstand zwischen freiem Ende von 5 und Stirnseite von 3a
- x: Verschiebestrecke von 5
- y: Verschiebeweg von 2 bzw. 3

## Patentansprüche

1. Mechanisches Lenkgetriebe eines Kraftfahrzeugs, wobei ein Getriebe-Abtriebselement (5) unter Einfluss eines insbesondere als Lenkspindel (11) ausgebildeten Getriebe-Eingangselements längs verschoben und diese Verschiebebewegung (x) auf eine an ein lenkbares Fahrzeug-Rad angelenkte Spurstange (2) oder dgl. übertragen wird,
**dadurch gekennzeichnet, dass** zwischen dem Getriebe-Abtriebselement (5) und der Spurstange (2) ein Zwischengetriebe (1) vorgesehen ist, durch welches in Abhängigkeit von der Verschiebebewegung (x) des Getriebe-Abtriebselements (5) der Verschiebeweg (y) der Spurstange (2) vergrößert oder verringert oder im wesentlichen unverändert übertragen werden kann.

2. Mechanisches Lenkgetriebe nach Anspruch 1,
**dadurch gekennzeichnet, dass** das Zwischengetriebe (1) als Kurvenbahngetriebe ausgebildet ist.

3. Mechanisches Lenkgetriebe nach Anspruch 2,
**dadurch gekennzeichnet, dass** das Getriebe-Abtriebselement (5) mit einem Bewegungsgewinde (5a) verbunden ist, das mit einer an der Spurstange (2) oder dgl. angelenkte Steuerhülse (4) zusammenwirkt, die mit einem Führungselement (9) in einer Kurvenbahn (8) des Zwischengetriebes (1) geführt ist, so dass die Steuerhülse (4) aufgrund einer vom Getriebe-Abtriebselement (5) hervorgerufenen Längsverschiebung gegenüber dem Getriebe-Abtriebselement (5) verdreht wird und als Folge hiervon über das Bewegungsgewinde (5a) die Steuerhülse (4) gegenüber dem Getriebe-Abtriebselement (5) längsverschoben wird.

4. Mechanisches Lenkgetriebe nach Anspruch 3,
**dadurch gekennzeichnet, dass** das Bewegungsgewinde (5a) auf dem Getriebe-Abtriebselement (5) aufgebracht ist und die mit einem entsprechenden Innengewinde (4a) versehene Steuerhülse (4) koaxial auf das Getriebe-Abtriebselement (5) aufgeschraubt ist.

5. Mechanisches Lenkgetriebe nach einem der vorangegangenen Ansprüche,
**dadurch gekennzeichnet, dass** die Steuerhülse (4) im Gehäuse (7) des Zwischengetriebes (1), in welchem auch die Kurvenbahn (8) eingebracht ist, geführt ist.

6. Mechanisches Lenkgetriebe nach einem der vorangegangenen Ansprüche,
**dadurch gekennzeichnet, dass** das Lenkgetriebe (10) als Zahnstangenlenkung und das Getriebe-Abtriebselement (5) demzufolge als geeignet verlängerte Zahnstange (5) ausgebildet ist.

7. Mechanisches Lenkgetriebe nach einem der vorangegangenen Ansprüche,
**dadurch gekennzeichnet, dass** mittels eines geeignet in das Zwischengetriebe (1) eingreifenden Aktuators die zugeordnete Spurstange (2) auch unabhängig von einer Verstellbewegung des Getriebe-Abtriebselementes (5) verschiebbar ist.

8. Mechanisches Lenkgetriebe nach Anspruch 7,
**dadurch gekennzeichnet, dass** das die Kurvenbahn (8) enthaltende Gehäuse (7) des Zwischengetriebes (1) gegenüber dem Getriebe-Abtriebselement (5) des eigentlichen Lenkgetriebes (10) um die gemeinsame Längsachse (12) verdrehbar ist.

9. Mechanisches Lenkgetriebe nach einem der vorangegangenen Ansprüche mit jeweils einem Zwischengetriebe (1) für das linke bzw. rechte lenkbare Rad eines zweispurigen Kraftfahrzeugs,
**dadurch gekennzeichnet, dass** durch eine symmetrische Ausprägung der Kurvenbahn (8) des der linken und des der rechten Spurstange (2) zugeordneten Kurvenbahn-Zwischengetriebes (1) bei geeigneter Gestaltung der einzelnen Kurvenbahnen (8) ein unterschiedlicher Spurdifferenzwinkel über dem Lenkeinschlag erzeugt wird.

10. Mechanisches Lenkgetriebe nach einem der Ansprüche 7 - 9 mit jeweils einem Zwischengetriebe (1) für das linke bzw. rechte lenkbare Rad eines zweispurigen Kraftfahrzeugs,
**dadurch gekennzeichnet, dass** durch die zusätzliche aktive Verstellung, die unabhängig von einer Verstellbewegung des Getriebe-Abtriebselementes (5) einleitbar ist, bei einer gegenläufigen Verstellung des linken Rades gegenüber dem rechten Rad des Kraftfahrzeugs die Spurdifferenzwinkel in Abhängigkeit von fahrdynamischen Parametern gezielt aktiv eingestellt werden und/oder dass bei gleichläufiger Verstellung zwischen dem linken und rechten lenkbaren Fahrzeug-Rad eine stufenlose Variation der Lenkgesamtübersetzung umgesetzt wird.
